(19) Europäisches Patentamt
European Patent Office
Office européen des brevets

(11) **EP 3 715 903 B1**

(12) **EUROPEAN PATENT SPECIFICATION**

(45) Date of publication and mention
of the grant of the patent:
**28.12.2022 Bulletin 2022/52**

(21) Application number: **19165773.3**

(22) Date of filing: **28.03.2019**

(51) International Patent Classification (IPC):
**G01S 7/48** *(2006.01)*    **G01S 7/481** *(2006.01)*
**G01S 17/10** *(2020.01)*

(52) Cooperative Patent Classification (CPC):
**G01S 7/4802; G01S 7/4815; G01S 17/10**

(54) **LASER DISTANCE METER AND METHOD OF MEASURING A DISTANCE**

LASERENTFERNUNGSMESSGERÄT UND VERFAHREN ZUR MESSUNG EINER ENTFERNUNG

DISPOSITIF DE MESURE DE DISTANCE PAR LASER ET PROCÉDÉ DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.09.2020 Bulletin 2020/40**

(73) Proprietor: **Vestel Elektronik Sanayi ve Ticaret A.S.
45030 Manisa (TR)**

(72) Inventor: **YILMAZLAR, Ísmail
45030 Manisa (TR)**

(74) Representative: **Flint, Adam
Page White & Farrer Limited
Bedford House
21A John Street
London WC1N 2BF (GB)**

(56) References cited:
**EP-A2- 1 978 377    US-A1- 2015 109 603**

## Description

Technical Field

The present disclosure relates to a laser distance meter and a method of measuring a distance to an object.

Background

A laser distance meter (also referred to as a laser rangefinder or a laser distance measurer) emits a laser beam which is reflected by an object. The reflected beam is detected by the laser distance meter. In some techniques, multiple laser beams may be transmitted to and reflected by the object. Known techniques for a laser distance meter include the time-of-flight method, the multiple frequency phase-shift method and the interferometry method.

However, known laser distance meters may not always be able to provide an accurate measurement of the distance, or indeed any measurement at all. There may be a number of reasons for this.

US2015109603A1 discloses a lidar sensor apparatus that acquires and processes individual characteristic information about an object in addition to distance and shape information about the object.

EP1978377A2 discloses a distance/speed meter in which first and second semiconductor lasers emit parallel laser light beams to a measurement target.

Summary

According to a first aspect disclosed herein, there is provided a laser distance meter for measuring a distance to an object, the laser distance meter comprising:

a laser for emitting laser light; and
a photodetector for detecting laser light emitted by the laser and reflected by an object;
characterised in that:

the laser distance meter is arranged such that mode hopping is induced in the laser in use so that the laser emits laser light of different wavelengths; and
the laser distance meter is arranged to calculate the distance to a said object based on at least laser light of one of the different wavelengths reflected by a said object and detected by the photodetector.

It has been appreciated that in some cases in use of a laser distance meter, if the laser distance meter emits only laser light of one wavelength, that light may not be adequately received at the object and/or reflected by the object and/or received at the photodetector. This may be due for example to one or more of noise, interference and coherence problems. By inducing mode hopping, in a controlled manner, in the laser so that the laser distance meter emits laser light of a number of different wavelengths, it is more likely that at least one wavelength will adequately reach the object and be adequately reflected by the object and be adequately received at the photodetector so as to enable a sensible signal to be received and processed.

The or each laser may be a laser diode.

In an example, the laser distance meter comprises a drive circuit for providing a drive current to drive the laser to emit laser light, wherein the drive circuit is arranged to vary the drive current to the laser over time to induce mode hopping such that the laser emits laser light of different wavelengths

In an example, the laser distance meter comprises a drive circuit for providing a drive current to drive the laser to emit laser light, wherein the drive circuit is arranged to vary the drive current to the laser over time to induce mode hopping such that the laser emits laser light of different wavelengths.

The laser may be driven so that it emits laser light of different wavelengths at different times or so that it emits laser light of different wavelengths substantially simultaneously.

In an example, the laser distance meter comprises a single laser. Use of a single laser can help to keep down the manufacturing cost of the laser distance meter, and enables the laser distance meter to have a small, compact size.

In another example, the laser distance meter comprises plural lasers, the laser distance meter being arranged to induce mode hopping in at least some of the lasers such that said lasers emit laser light of different wavelengths. Use of plural lasers can make the drive circuit simpler and less expensive to implement.

In an example, the laser distance meter comprises:

a timing circuit constructed and arranged to measure the total travel time T taken for laser light emitted by the laser to reach a said object and be detected by the photodetector after reflection by a said object for at least some of the different wavelengths; and
a distance calculating circuit constructed and arranged to calculate the distance d to a said object based on the total travel time T for at least one of the different wavelengths.

At least the timing circuit and the distance calculating circuit may be implemented, at least in part, by one or more processors.

In an example, the distance calculating circuit is configured to compare the total travel times T or calculated distances for a plurality of the different wavelengths and to discard any total travel times or calculated distances that are outliers.

In general, an outlier may be regarded as a data point in a set of results that is very much bigger or smaller than the next nearest data point or some other data points. In the case of the time-of flight example, if there are for example two travel times T or calculated distances d for two different wavelengths that have a similar value (say within 5% or 10% or so of each other) and there is a third travel time T or calculated distance d that has a rather different value (say more than 5% or 10% greater or less than the values of the two other travel times T), then that third travel time T or calculated distance d is regarded as an outlier and is discarded. This use of multiple wavelengths, and discarding travel times T or calculated distances d that are very different from others, enables more accurate and reliable measurements of distance.

In an example, the distance calculating circuit is configured to calculate the distance d to a said object as an average of the total travel times T for at least some of the different wavelengths.

The use of multiple wavelengths and obtaining the distance as an average of readings for at least some of the multiple wavelengths enables more accurate and reliable measurements of distance.

According to a second aspect disclosed herein, there is provided a method of measuring a distance to an object using a laser distance meter, the laser distance meter comprising a laser for emitting laser light and a photodetector for detecting laser light emitted by the laser and reflected by an object, the method comprising:

operating the laser to emit laser light of different wavelengths by inducing mode hopping in the laser; detecting, by the photodetector, laser light emitted by the laser distance meter and reflected by the object for at least one of the different wavelengths; and calculating the distance d to the object based on at least the laser light detected by the photodetector.

In an example, the method comprises: varying a drive current provided to drive the laser over time to induce mode hopping such that the laser emits laser light of different wavelengths.

In an example, the laser distance meter comprises a single laser.

In an example, the laser distance meter comprises plural lasers, and the method comprises: varying a drive current provided to drive at least some of the lasers to induce mode hopping to respectively emit laser light of different wavelengths.

In an example, the method comprises:

measuring the total travel time T taken for laser light emitted by the laser to reach the object and be detected by the photodetector after reflection by the object for at least some of the different wavelengths; and calculating the distance d to the object based on the total travel time T for at least one of the different wavelengths

In an example, the method comprises: comparing the total travel times T or calculated distances for a plurality of the different wavelengths and discarding any total travel times or calculated distances that are outliers.

In an example, the method comprises: calculating the distance d to the object as an average of the total travel times T for at least some of the different wavelengths.

Brief Description of the Drawings

To assist understanding of the present disclosure and to show how embodiments may be put into effect, reference is made by way of example to the accompanying drawings in which:

Figure 1 shows schematically an example of a laser distance meter according to the present disclosure measuring a distance to an object;

Figure 2 shows schematically how the wavelength emitted by a laser diode varies with drive current; and

Figure 3 shows schematically an example of mode hopping in a laser diode over time.

Detailed Description

As mentioned, a laser distance meter emits a laser beam which is reflected by an object and the reflected beam is detected by the laser distance meter. Laser distance meters are used in many applications, including range finding or distance measuring generally, 3-D modelling, construction (for example to allow builders and decorators to quickly and conveniently measure lengths and heights of walls and buildings, etc.), etc.

However, as mentioned, known laser distance meters may not always be able to provide an accurate measurement of the distance, or indeed any measurement at all. This is particularly, though not exclusively, the case when long distances are being measured (such as over 50 m or so). One cause of this that has been identified is environmental interference caused to the laser light as it passes through air (or some other medium) to the object and/or back to the laser distance meter. Another cause that has been identified is speckle noise which can be introduced when the coherent laser beam is reflected by the object. Speckle noise arises when a highly coherent laser light beam reflects off a surface. In particular, interfering wave fronts create a non-uniform intensity distribution which consists of brighter and dimmer regions, giving a "speckled" appearance. In any event, the laser distance meter may not receive back a sufficiently clean and strong light beam, which is sufficiently free of noise and of sufficient amplitude, to enable a reliable detection or reading to be made.

In examples described herein, a laser distance meter is provided that emits laser light of a number of different wavelengths. It has been appreciated that many interference and coherence problems affect some wavelengths more than others. By using a plurality of different wavelengths, it is more likely that at least one wavelength will adequately reach the object and be adequately reflected by the object and be adequately received at the photodetector so as to enable a sensible signal to be received and processed. A number of examples of how to arrange a laser distance meter to emit laser light of a number of different wavelengths are discussed further below. Mode-hopping, in particular controlled mode-hopping, is used to force the laser source to emit light at different wavelengths.

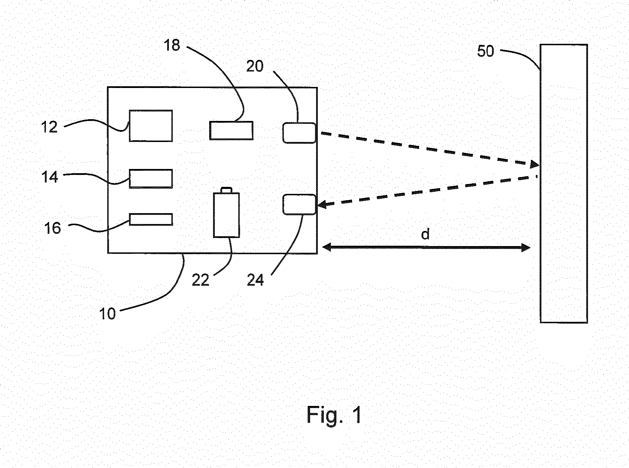

Referring now to the drawings, Figure 1 shows schematically an example of a laser distance meter 10 according to the present disclosure. The laser distance meter 10 is shown measuring a distance d to an object 50. The laser distance meter 10 has a processor 12, working memory 14 and data storage 16. The processor 12 controls the overall operation of the laser distance meter 10. Whilst a single processor 12 is shown for controlling the operation of the laser distance meter 10 in the figure, there may be plural processors for controlling different aspects of the laser distance meter 10. There may also be additional circuity (not all shown) for controlling different aspects of the laser distance meter 10.

The laser distance meter 10 has at least one laser 20 for emitting laser light. In some examples, the laser distance meter 10 has a single laser 20 and in other examples the laser distance meter 10 has plural lasers 20, as will be discussed further below. The or each laser 20 may be for example a laser diode. Laser diodes are commonly used in laser distance meters. Some examples described herein are particularly applicable to laser diodes. Nevertheless, in other examples, the laser may be of another type, including for example a solid-state laser, a gas laser, a fibre laser, etc. The laser distance meter 10 has a drive circuit 18 for providing a drive current to drive the or each laser 20 to emit laser light. The drive current is typically direct current (DC). The or each laser 20 may in general be operated in either continuous or pulsed mode, depending on whether the power output of the laser 20 is continuous over time or is in the form of pulses of light. The laser distance meter 10 may be mainspowered and/or may be battery-powered using one or more batteries 22.

The laser distance meter 10 further has at least one photodetector 24 for detecting laser light reflected back to the laser distance meter 10 by the object 50. The photodetector 24 may be for example a photodiode, a phototransistor, etc.

As a particular example when the laser distance meter 10 is using the "time-of-flight" technique, the laser distance meter 10 measures the distance d to the object 50 by measuring the travel time or time of flight T for light to travel from the laser distance meter 10 to the object 50 and back. The distance d to the object from the laser distance meter is then simply calculated as the speed of light c times the travel time T divided by 2 (as the light traverses the distance d twice). That is, $d = c \times T/2$. For this, the laser distance meter 10 has a timing circuit which measures the total travel time T taken for the laser light emitted by the laser distance meter 10 to reach the object 50 and be detected by the photodetector 24 after reflection by the object 50, and the laser distance meter 10 has a distance calculating circuit which calculates the distance d to the object 50 based on the total travel time T. One or both of the timing circuit and the distance calculating circuit may be implemented wholly or partially by the main processor 12, by another processor, or other circuitry in the laser distance meter 10. Other techniques for measuring the distance or the like will be discussed further below.

In accordance with the present disclosure and as mentioned, the laser distance meter 10 is arranged so that it emits laser light of a number of different wavelengths. This can be achieved in a number of ways, as will be discussed. But importantly, by using a number of different wavelengths, it is more likely that at least one wavelength will adequately reach the object 50 and be adequately reflected by the object 50 and be adequately received at the photodetector 24 so as to enable a sensible signal to be received and processed at the laser distance meter 10. That is, at least one wavelength is likely not to be affected by noise or interference or speckle or coherence problems. Moreover, laser light of plural different wavelengths may be received at the photodetector 24, allowing an averaging process to take place, again as will be discussed, which can increase the accuracy of the measurement of the distance to the object 50.

In one example, there are plural lasers 20 and the plural lasers 20 are arranged and operated so that at least some of them emit laser light of different wavelengths. The plural lasers 20 may be operated so that they emit laser light of different wavelengths simultaneously or separated in time. The use of plural lasers 20 can help to keep down the complexity and therefore the cost of the circuitry (such as the processor(s) 12 or other circuitry) that drives the lasers 20.

In another example, there is a single laser 20. This can help to keep down the manufacturing cost of the laser distance meter 10. It also enables the laser distance meter 10 to have a small, compact size.

In the case that the laser distance meter 10 has a single laser 20, the laser 20 is driven by the drive circuit 18 such that the laser 20 undergoes mode hopping. Mode hopping may also be used for one or more lasers 20 in the case that the laser distance meter 10 has plural lasers 20.

Mode hopping is a term used to describe how a laser can exhibit sudden shifts of wavelength of the laser light which is emitted by the laser and is associated with transitions between different modes of the resonator of the laser. Under some external influence, a laser may operate on a single resonator mode for a period of time, but then suddenly switch to some other mode, with corresponding shifts in the wavelength of the laser light which is emitted.

In general in many devices and many applications, including in laser distance meters or rangefinders, mode hopping is regarded as undesirable as it can introduce unwanted noise due to interference occurring. Known techniques for laser distance meters or rangefinders therefore deliberately avoid causing mode hopping or take measures to prevent mode hopping occurring. However, in accordance with the present disclosure, especially in the case that the laser distance meter 10 has a single laser 20, the laser distance meter 10 is operated so that the laser 20 undergoes mode hopping. Mode hopping in a laser diode occurs due to changes in the temperature of the laser diode and/or the injection current in the laser diode. The mode hopping that is used herein in examples may be regarded as controlled mode hopping as the mode hopping is deliberately induced and is done so in a controlled manner.

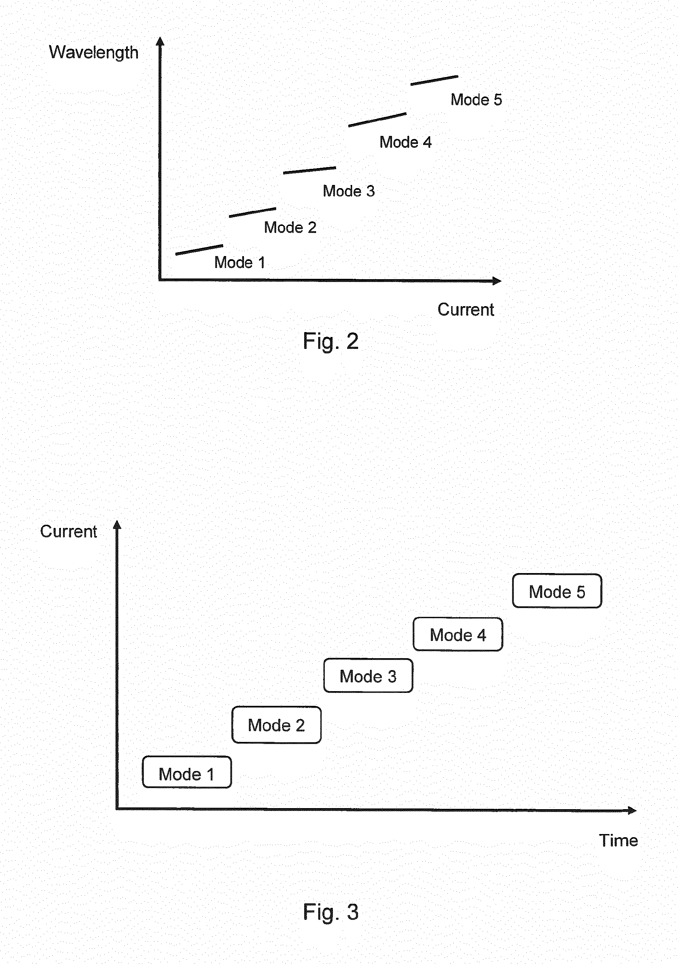

To cause the laser 20 of the laser distance meter 10 to undergo mode hopping, in an example the drive circuit 18 is operated so as to vary the drive current to the laser 20 so as to excite different modes of the laser 20 as desired. This current modulation induces independent longitudinal modes which are separated by mode hopping. Each mode behaves like an independent source of laser light. This is illustrated schematically in Figure 2, which shows the wavelength of the laser light emitted by the laser 20 against drive current. At a low current, the wavelength of the laser light is relatively small, as indicated by Mode 1 in the figure. As the current increases, the wavelength tends to increase slightly until at a certain drive current, the wavelength jumps to a higher value, indicated by Mode 2 in the figure. This continues, with further jumps in wavelength through to Mode 5 (and possibly more modes/wavelengths, for greater drive currents).

In one example, the drive circuit 18 may operate so as to provide a drive current having a value that is set to cause a particular wavelength of light to be emitted by the laser 20, and then the drive current is increased or decreased as necessary to cause a different wavelength of light to be emitted by the laser 20. That is, the drive current may for example be increased (or decreased) over time and may then be cycled back to its initial value and increased (or decreased) again. This is shown schematically in Figure 3, which shows the drive current increasing with time to induce the different modes Mode 1, Mode 2, etc. having increasing wavelength. In another example, the drive circuit 18 may operate so as to provide drive current that has a triangular waveform. This can result in plural modes being induced substantially simultaneously, resulting in plural wavelengths of laser light being emitted by the laser 20 substantially simultaneously. In any case, the drive circuit 18 may operate so as to induce two modes and therefore two wavelengths, or to induce more than two modes and therefore more than two wavelengths.

Having emitted plural wavelengths of laser light, in general at least one of the wavelengths is likely to be received at and reflected by the object 50 and received back at the photodetector 24 of the laser distance meter 10 with sufficient amplitude and sufficiently free of noise in order for the photodetector 24 to get a reliable reading. That is, the distance calculating circuit is likely to be able to calculate the distance d to the object 50 using the reading obtained from at least one of the emitted wavelengths.

Moreover, a number of wavelengths of laser light may be received back at the photodetector 24 of the laser distance meter 10 with sufficient amplitude and sufficiently free of noise in order for the photodetector 24 to get a reading from each of them. In such a case, the accuracy of the calculation of the distance d can be increased.

In particular, in general, each wavelength of laser light $\lambda_i$ may result in a calculated distance di that is slightly different for each wavelength $\lambda_i$. This may be because of minor variations in interference or noise that affect each wavelength $\lambda_i$ differently. Accordingly, in an example when plural wavelengths of laser light are received back at the photodetector 24, the laser distance meter 10 may take an average of the calculated distances di for each different wavelength $\lambda_i$. In particular, if n different wavelengths $\lambda_i$ of laser light are received back at the photodetector 24 and n distances $d_i$ are calculated, a final measurement d is obtained as:

$$d = \frac{1}{N} \sum_{1}^{N} d_i$$

That is, if for example five modes are induced such that five wavelengths $\lambda_1$ to $\lambda_5$ are emitted and received at the photodetector 24 of the laser distance meter 10, and five corresponding distances di to ds are initially calculated by the distance calculating circuit, a final measurement d is obtained as:

$$d = (d_1 + d_2 + d_3 + d_4 + d_5)/5$$

Moreover, it may be that plural wavelengths of light are received at the photodetector 24 but one or more of them is somewhat affected by interference or noise, etc., or is more affected by interference or noise than other wavelengths, such that the calculated distance for the affected wavelengths are not correct. In a conventional laser distance meter which uses only a single wavelength, this leads to an incorrect measurement of the distance. However, in the present example, the processor 12 or other circuity is arranged to look for outliers, that is, readings that are significantly different from other readings, and discard any outliers when calculating the final distance measurement. For example, the laser distance meter 10 may inspect the travel times $T_i$ for the different received wavelengths $\lambda_1$ and, if there are for example two travel times T for two different wavelengths that have a similar value (say within 5% or 10% or so of each other) and there is a third travel time T that has a rather different value (say more than 5% or 10% greater or less than the values of the two other travel times T), then that third travel time T is regarded as an outlier and is discarded. The laser distance meter 10 may for example initially take an average of the travel times T for all wavelengths and then compare the travel time T for each wavelength individually, and discard any that are more than 5% or 10%, etc. different, and then calculate the final distance measurement based on the remaining measurements which are deemed to be reliable. Equivalently, the distance calculating circuit may calculate distances for all wavelengths and discard any distances that are outliers before averaging the remaining distances to provide a final calculated distance measurement. In any event, this use of plural wavelengths and discarding of any readings that are outliers further improves the accuracy and reliability of the final calculated distance measurement.

For example and following the example above, it may be that there is a source of noise which affects the second wavelength $\lambda_2$ very strongly, such that the calculated distance $d_2$ for that second wavelength $\lambda_2$ is very different from the others. Accordingly, the calculated distance $d_2$ for that second wavelength $\lambda_2$ is discarded, and the final measurement d is obtained as:

$$d = (d_1 + d_3 + d_4 + d_5)/4$$

In summary, the laser distance meter 10 outputs laser light of different wavelengths. In examples, this is achieved by using controlled mode hopping at the laser source. This can increase the likelihood that at least some laser light, of at least one wavelength, reaches the object 50 and is reflected back to the laser distance meter 10 with sufficient amplitude and sufficiently free of noise to enable reliable measurements to be made. Moreover, if plural different wavelengths are received back at the laser distance meter 10, an averaging and/or discarding of outliers in the measurements can take place, further increasing the accuracy and reliability of the measurements.

As an alternative to the time-of-flight method discussed above, a laser rangefinder may use a multiple frequency phase-shift method, as is known per se. This measures the phase shift of multiple frequencies on reflection then solves some simultaneous equations to give a final measure. The phase-shift method uses an intensity-modulated laser beam.

In particular, in the phase-shift method, a laser beam with sinusoidally modulated optical power is sent to a target object. Light reflected by the object (from diffuse or specular reflections) is monitored. The phase of the power modulation in the reflected light is compared with that of the transmitted light. The distance to the object can then be calculated based on the relative phase shift between the two modulation signals as that relative phase shift depends on the distance of the object. Further, by comparing measurement results with different modulation frequencies, any ambiguity regarding the measured distance can be removed. Such ambiguity can arise because the phase varies periodically with increasing distance. The phase-shift method is particularly useful for objects that have diffuse reflection from a rough surface.

The power modulation may be obtained with for example an electro-optic modulator, acting on a continuous-wave laser beam. Alternatively, some kinds of lasers, particularly laser diodes, can be power-modulated directly via the drive current at frequencies in the megahertz domain or even higher. As another alternative, power modulation may be achieved by using a mode-locked laser.

As another alternative to the time-of-flight method discussed above, a laser rangefinder may use an interferometry technique, again as is known per se. In this technique, a laser source emits a beam of laser light which is emitted at a frequency that is continuously varied or "chirped". Chirping the frequency involves sweeping the frequency between a lower frequency and an upper frequency in a periodic manner, using for example a sawtooth waveform, a triangular waveform, etc. The laser light is split into a target beam and a reference beam. A target interferometer receives the target beam and a reference interferometer receives the reference beam. The target interferometer generates a target signal corresponding to a frequency difference between one portion of the target beam directed towards, and reflected from, the target object, and another portion of the target beam directed over a path with a known or otherwise fixed path length. The reference interferometer receives the reference beam and generates a reference signal corresponding to a frequency difference between two portions of the reference beam that are directed over two separate fixed paths with a known path length difference. The target signal and the reference signal are then processed to determine the distance between the target interferometer and the target object.

In both of these other techniques, and in others not specifically described here, noise or a lack of sufficient reflection by the target object can again cause loss of accuracy and can even cause the technique to fail because the laser light may not be adequately received at the object and/or reflected by the object and/or received at the photodetector(s). Accordingly, causing the laser distance meter to output laser light of different wavelengths can have the same benefits for these and other techniques as described above for the time-of-flight technique. That is, this can increase the likelihood that at least some laser light, of at least one wavelength, reaches the object and is reflected back to the laser distance meter with sufficient amplitude and sufficiently free of noise to enable reliable measurements to be made. Moreover, if plural different wavelengths are received back at the laser distance meter 10, an averaging and/or discarding of outliers in the measurements can take place, further increasing the accuracy and reliability of the measurements. In examples, this is again achieved by using controlled mode hopping at the laser source.

It will be understood that the processor or processing system or circuitry referred to herein may in practice be provided by a single chip or integrated circuit or plural chips or integrated circuits, optionally provided as a chipset, an applicationspecific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory (including for example a solid-state drive or SSD).

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

## Claims

1. A laser distance meter (10) for measuring a distance to an object, the laser distance meter (10) comprising:

   a laser (20) for emitting laser light; and
   a photodetector (24) for detecting laser light emitted by the laser (20) and reflected by an object;
   **characterised in that**:

   the laser distance meter (10) is arranged such that mode hopping is induced in the laser (20) in use so that the laser (20) emits laser light of different wavelengths; and
   the laser distance meter (10) is arranged to calculate the distance to a said object based on at least laser light of one of the different wavelengths reflected by a said object and detected by the photodetector (24).

2. A laser distance meter (10) according to claim 1, comprising a drive circuit (18) for providing a drive current to drive the laser (20) to emit laser light, wherein the drive circuit (18) is arranged to vary the drive current to the laser (20) over time to induce mode hopping such that the laser (20) emits laser light of different wavelengths.

3. A laser distance meter (10) according to claim 1 or claim 2, wherein the laser distance meter (10) comprises a single laser (20).

4. A laser distance meter (10) according to claim 1 or claim 2, wherein the laser distance meter (10) comprises plural lasers (20), the laser distance meter (10) being arranged to induce mode hopping in at least some of the lasers (20) such that said lasers (20) emit laser light of different wavelengths.

5. A laser distance meter (10) according to any of claims 1 to 4, comprising:

   a timing circuit constructed and arranged to measure the total travel time T taken for laser light emitted by the laser (20) to reach a said object and be detected by the photodetector (24) after reflection by a said object for at least some of the different wavelengths; and
   a distance calculating circuit constructed and arranged to calculate the distance d to a said object based on the total travel time T for at least one of the different wavelengths.

6. A laser distance meter (10) according to claim 5, wherein the distance calculating circuit is configured to compare the total travel times T or calculated distances for a plurality of the different wavelengths and to discard any total travel times or calculated distances that are outliers.

7. A laser distance meter (10) according to claim 5 or claim 6, wherein the distance calculating circuit is configured to calculate the distance d to a said object as an average of the total travel times T for at least some of the different wavelengths.

8. A method of measuring a distance to an object using a laser distance meter (10), the laser distance meter (10) comprising a laser (20) for emitting laser light and a photodetector (24) for detecting laser light emitted by the laser (20) and reflected by an object, the method being **characterized by**:

> operating the laser (20) to emit laser light of different wavelengths by inducing mode hopping in the laser (20);
> detecting, by the photodetector (24), laser light emitted by the laser distance meter (10) and reflected by the object for at least one of the different wavelengths; and
> calculating the distance d to the object based on at least the laser light detected by the photodetector (24).

9. A method according to claim 8, comprising:
varying a drive current provided to drive the laser (20) over time to induce mode hopping such that the laser (20) emits laser light of different wavelengths.

10. A method according to claim 8 or claim 9, wherein the laser distance meter (10) comprises a single laser (20).

11. A method according to claim 8 or claim 9, wherein the laser distance meter (10) comprises plural lasers (20), the method comprising:

> varying a drive current provided to drive at least some of the lasers (20) to induce mode hopping to respectively emit laser light of different wavelengths.

12. A method according to any of claims 8 to 11, comprising

> measuring the total travel time T taken for laser light emitted by the laser (20) to reach the object and be detected by the photodetector (24) after reflection by the object for at least some of the different wavelengths; and
> calculating the distance d to the object based on the total travel time T for at least one of the different wavelengths.

13. A method according to claim 12, comprising:
comparing the total travel times T or calculated distances for a plurality of the different wavelengths and discarding any total travel times or calculated distances that are outliers.

14. A method according to claim 12 or claim 13, comprising:
calculating the distance d to the object as an average of the total travel times T for at least some of the different wavelengths.

15. A laser distance meter (10) according to any of claims 1 to 7 or a method according to any of claims 8 to 14, wherein the or each laser (20) is a laser diode.

**Patentansprüche**

1. Laser-Abstandsmesser (10) zum Messen eines Abstands zu einem Objekt, wobei der Laser-Abstandsmesser (10) aufweist:

> einen Laser (20) zum Emittieren von Laserlicht; und
> einen Photodetektor (24) zum Detektieren von Laserlicht, das von dem Laser (20) emittiert und von einem Objekt reflektiert wird;
> **dadurch gekennzeichnet, dass**
> der Laser-Abstandsmesser (10) so eingerichtet ist, dass ein Modenspringen im Laser (20) im Einsatz erzeugt wird, sodass der Laser (20) Laserlicht verschiedener Wellenlängen emittiert; und
> der Laser-Abstandsmesser (10) eingerichtet ist, um den Abstand zum Objekt basierend auf wenigstens Laserlicht einer der verschiedenen Wellenlängen, die vom Objekt reflektiert und durch den Photodetektor (24) detektiert werden, zu berechnen.

2. Laser-Abstandsmesser (10) nach Anspruch 1, aufweisend eine Antriebsschaltung (18) zum Bereitstellen eines Antriebsstroms, um den Laser (20) anzutreiben, um Laserlicht zu emittieren, wobei die Antriebsschaltung (18) eingerichtet ist, um den Antriebsstrom dem Laser (20) im Zeitablauf zu variieren, um Modenspringen so zu erzeugen, dass der Laser (20) Laserlicht verschiedener Wellenlängen emittiert.

3. Laser-Abstandsmesser (10) nach Anspruch 1 oder Anspruch 2, wobei der Laser-Abstandsmesser (10) einen einzigen Laser (20) aufweist.

4. Laser-Abstandsmesser (10) nach Anspruch 1 oder Anspruch 2, wobei der Laser-Abstandsmesser (10) mehrere Laser (20) aufweist, wobei der Laser-Abstandsmesser (10) eingerichtet ist, um Modenspringen in wenigstens einigen der Laser (20) so zu erzeugen, dass die Laser (20) Laserlicht verschiedener Wellenlängen emittieren.

5. Laser-Abstandsmesser (10) nach einem der Ansprüche 1 bis 4, aufweisend:

eine Zeitschaltung, die konstruiert und eingerichtet ist, um die Gesamtlaufzeit T, die für vom Laser (20) emittiertes Laserlicht genommen wird, um das Objekt zu erreichen, und durch den Photodetektor (24) nach Reflexion durch das Objekt detektiert wird, für wenigstens einige der verschiedenen Wellenlängen zu messen; und eine Abstandsberechnungsschaltung, die konstruiert und eingerichtet ist, um den Abstand d zum Objekt basierend auf der Gesamtlaufzeit T für wenigstens eine der verschiedenen Wellenlängen zu berechnen.

6. Laser-Abstandsmesser (10) nach Anspruch 5, wobei die Abstandsberechnungsschaltung konfiguriert ist, um die Gesamtlaufzeiten T oder berechneten Abstände für mehrere verschiedene Wellenlängen zu vergleichen und jegliche Gesamtlaufzeiten oder berechnete Abstände, die Ausreißer sind, zu verwerfen.

7. Laser-Abstandsmesser (10) nach Anspruch 5 oder Anspruch 6, wobei die Abstandsberechnungsschaltung konfiguriert ist, um den Abstand d zum Objekt als einen Durchschnitt der Gesamtlaufzeiten T für wenigstens einige der verschiedenen Wellenlängen zu berechnen.

8. Verfahren zum Messen eines Abstands zu einem Objekt unter Verwendung eines Laser-Abstandsmessers (10), wobei der Laser-Abstandsmesser (10) einen Laser (20) zum Emittieren von Laserlicht und einen Photodetektor (24) zum Detektieren von Laserlicht, das vom Laser (20) emittiert und von einem Objekt reflektiert wird, aufweist, wobei das Verfahren **gekennzeichnet ist durch**:

Betreiben des Lasers (20), um Laserlicht verschiedener Wellenlängen **durch** Erzeugen von Modenspringen im Laser (20) zu emittieren; Detektieren von vom Laser-Abstandsmesser (10) emittiertes und vom Objekt reflektiertes Laserlicht für wenigstens eine der verschiedenen Wellenlängen **durch** den Photodetektor (24); und Berechnen des Abstands d zum Objekt basierend auf wenigstens dem Laserlicht, das **durch** den Photodetektor (24) detektiert wird.

9. Verfahren nach Anspruch 8, aufweisend:

Variieren eines Antriebsstroms, der bereitgestellt wird, um den Laser (20) anzutreiben, im Zeitablauf, um Modenspringen so zu erzeugen, dass der Laser (20) Laserlicht verschiedener Wellenlängen emittiert.

10. Verfahren nach Anspruch 8 oder 9, wobei der Laser-Abstandsmesser (10) einen einzigen Laser (20) aufweist.

11. Verfahren nach Anspruch 8 oder Anspruch 9, wobei der Laser-Abstandsmesser (10) mehrere Laser (20) aufweist, wobei das Verfahren aufweist:
Variieren eines Antriebsstroms, der bereitgestellt wird, um wenigstens einige der Laser (20) anzutreiben, um Modenspringen zu erzeugen, um jeweils Laserlicht verschiedener Wellenlängen zu emittieren.

12. Verfahren nach einem der Ansprüche 8 bis 11, aufweisend

Messen der Gesamtlaufzeit T, die für vom Laser (20) emittiertes Laserlicht genommen wird, um das Objekt zu erreichen, und durch den Photodetektor (24) nach Reflexion durch das Objekt detektiert wird, für wenigstens einige der verschiedenen Wellenlängen; und Berechnen des Abstands d zum Objekt basierend auf der Gesamtlaufzeit T für wenigstens eine der verschiedenen Wellenlängen.

13. Verfahren nach Anspruch 12, aufweisend:
Vergleichen der Gesamtlaufzeiten T oder berechneten Abstände für mehrere verschiedene Wellenlängen und Verwerfen jeglicher Gesamtlaufzeiten oder berechneter Abstände, die Ausreißer sind.

14. Verfahren nach Anspruch 12 oder Anspruch 13, aufweisend:
Berechnen des Abstands d zum Objekt als einen Durchschnitt der Gesamtlaufzeiten T für wenigstens einige der verschiedenen Wellenlängen.

15. Laser-Abstandsmesser (10) nach einem der Ansprüche 1 bis 7 oder Verfahren nach einem der Ansprüche 8 bis 14, wobei der oder jeder Laser (20) eine Laserdiode ist.

## Revendications

1. Dispositif de mesure de distance par laser (10) destiné à mesurer une distance à un objet, le dispositif de mesure de distance par laser (10) comprenant :

un laser (20) destiné à émettre de la lumière laser ; et

un photodétecteur (24) destiné à détecter de la lumière laser émise par le laser (20) et réfléchie par un objet, **caractérisé en ce que** :

le dispositif de mesure de distance par laser (10) est agencé de telle sorte qu'un saut de mode soit induit dans le laser (20) en utilisation afin que le laser (20) émette de la lumière laser de différentes longueurs d'onde ; et
le dispositif de mesure de distance par laser (10) est agencé pour calculer la distance audit objet sur la base d'au moins la lumière laser d'une des différentes longueurs d'onde réfléchies par ledit objet et détectées par le photodétecteur (24).

2. Dispositif de mesure de distance par laser (10) selon la revendication 1, comprenant un circuit de pilotage (18) destiné à fournir un courant de pilotage pour conduire le laser (20) à émettre de la lumière laser, dans lequel le circuit de pilotage (18) est agencé pour faire varier dans le temps le courant de pilotage destiné au laser (20) afin d'induire un saut de mode de telle sorte que le laser (20) émette de la lumière laser de différentes longueurs d'onde.

3. Dispositif de mesure de distance par laser (10) selon la revendication 1 ou 2, dans lequel le dispositif de mesure de distance par laser (10) comprend un laser unique (20).

4. Dispositif de mesure de distance par laser (10) selon la revendication 1 ou 2, dans lequel le dispositif de mesure de distance par laser (10) comprend plusieurs lasers (20), le dispositif de mesure de distance par laser (10) étant agencé pour induire un saut de mode dans au moins certains des lasers (20) de telle sorte que lesdits lasers (20) émettent de la lumière laser de différentes longueurs d'onde.

5. Dispositif de mesure de distance par laser (10) selon l'une quelconque des revendications 1 à 4, comprenant :

un circuit de temporisation construit et agencé pour mesurer le temps de parcours total T pris pour que de la lumière laser émise par le laser (20) atteigne ledit objet et soit détectée par le photodétecteur (24) après réflexion par ledit objet pour au moins certaines des différentes longueurs d'onde ; et
un circuit de calcul de distance construit et agencé pour calculer la distance d audit objet sur la base du temps de parcours total T pour au moins l'une des différentes longueurs d'onde.

6. Dispositif de mesure de distance par laser (10) selon la revendication 5, dans lequel le circuit de calcul de distance est configuré pour comparer les temps de parcours totaux T ou les distances calculées pour une pluralité des différentes longueurs d'onde, et pour éliminer toutes valeurs de temps de parcours total ou de distance calculée aberrantes.

7. Dispositif de mesure de distance par laser (10) selon la revendication 5 ou 6, dans lequel le circuit de calcul de distance est configuré pour calculer la distance d audit objet en tant que moyenne des temps de parcours totaux T pour au moins certaines des différentes longueurs d'onde.

8. Procédé de mesure d'une distance à un objet en utilisant un dispositif de mesure de distance par laser (10), le dispositif de mesure de distance par laser (10) comprenant un laser (20) destiné à émettre de la lumière laser et un photodétecteur (24) destiné à détecter de la lumière laser émise par le laser (20) et réfléchie par un objet, le procédé étant **caractérisé par** les étapes de :

faire fonctionner le laser (20) pour émettre de la lumière laser de différentes longueurs d'onde en induisant un saut de mode dans le laser (20) ;
détecter, par le photodétecteur (24), de la lumière laser émise par le dispositif de mesure de distance par laser (10) et réfléchie par l'objet pour au moins l'une des différentes longueurs d'onde ; et
calculer la distance d à l'objet sur la base d'au moins la lumière laser détectée par le photodétecteur (24).

9. Procédé selon la revendication 8, consistant à :
faire varier un courant de pilotage qui est fourni pour conduire le laser (20) dans le temps à induire un saut de mode de telle sorte que le laser (20) émette de la lumière laser de différentes longueurs d'onde.

10. Procédé selon la revendication 8 ou 9, dans lequel le dispositif de mesure de distance par laser (10) comprend un laser unique (20).

11. Procédé selon la revendication 8 ou 9, dans lequel le dispositif de mesure de distance par laser (10) comprend plusieurs lasers (20), le procédé consistant à :
faire varier un courant de pilotage qui est fourni pour conduire au moins certains des lasers (20) à induire un saut de mode pour émettre respectivement de la lumière laser de différentes longueurs d'onde.

12. Procédé selon l'une quelconque des revendications 8 à 11, consistant à :

mesurer le temps de parcours total T pris pour que de la lumière laser émise par le laser (20) atteigne l'objet et soit détectée par le photodétecteur (24) après réflexion par l'objet pour au moins certaines des différentes longueurs d'onde ; et

calculer la distance d à l'objet sur la base du temps de parcours total T pour au moins l'une des différentes longueurs d'onde.

13. Procédé selon la revendication 12, consistant à :
comparer les temps de parcours totaux T ou les distances calculées pour une pluralité des différentes longueurs d'onde, et à éliminer toutes valeurs de temps de parcours total ou de distance calculée aberrantes.

14. Procédé selon la revendication 12 ou 13, consistant à :
calculer la distance d à l'objet en tant que moyenne des temps de parcours totaux T pour au moins certaines des différentes longueurs d'onde.

15. Dispositif de mesure de distance par laser (10) selon l'une quelconque des revendications 1 à 7 ou procédé selon l'une quelconque des revendications 8 à 14, dans lequel le ou chaque laser (20) est une diode laser.

Fig. 1

Wavelength

Mode 5

Mode 4

Mode 3

Mode 2

Mode 1

Current

Fig. 2

Current

Mode 5

Mode 4

Mode 3

Mode 2

Mode 1

Time

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015109603 A1
- EP 1978377 A2